# FASCICULE DE BREVET EUROPEEN

(11) **EP 0 570 565 B1**
(45) Date de publication et mention de la délivrance du brevet: **02.01.1997**
(21) Numéro de dépôt: 93900237.4
(22) Date de dépôt: 09.11.1992
(51) Int. Cl.: B65G 51/03

(54) **DISPOSITIF DE TRANSFERT SUR FLUX D'AIR**
VORRICHTUNG ZUM FÖDERN AUF EINEM LUFTFILM
DEVICE FOR TRANFERRING OBJECTS BY MEANS OF AN AIR FLOW

(30) Priorité: 08.11.1991 FR 9114052
(43) Date de publication de la demande: 24.11.1993
(73) Titulaire: V.C.S. Control Systems Inc., Québec H7W 4V3 (CA)
(72) Inventeur: V.C.S. Control Systems Inc., Québec H7W 4V3 (CA)
(74) Mandataire: Rhein, Alain
(86) Numéro de dépôt international: FR9201042
(87) Numéro de publication internationale: WO9309046

(56) Documents cités:
- AU-A- 596 797
- FR-A- 1 558 059
- FR-A- 2 169 553
- FR-A- 2 301 460
- US-A- 3 479 092
- US-A- 3 788 231

## Description

La présente invention a pour objet un dispositif de transfert sur flux d'air d'objets comportant au moins une surface globalement plane surmontant un caisson et comportant des rebords longitudinaux ainsi que des orifices régulièrement répartis dans lesquels sont introduits des bouchons percés d'au moins un orifice

On connaît déjà des dispositifs de transfert utilisant un flux d'air dirigé pour déplacer d'un endroit à un autre ces objets présentant une surface plane sur laquelle s'applique ledit flux d'air, comme par exemple, des boîtes.

Ces dispositifs sont principalement constitués de caissons métalliques dans la paroi supérieure desquels sont pratiqués, régulièrement répartis, des orifices d'axe oblique, ou jalousies, tous orientés dans la même direction. Une ventilation extérieure aux caissons insuffle de l'air par l'intermédiaire de gaines, et l'air s'échappe par les jalousies, créant un flux d'air orienté qui sert à la fois à la sustentation et au déplacement des objets. Des orifices d'axes verticaux pratiqués dans la paroi supérieure des caissons et servant uniquement à la sustentation peuvent être adjoints aux orifices obliques, notamment pour le déplacement d'objets dont le fond n'est pas parfaitement plat.

Les dispositifs existants présentent toutefois des inconvénients, notamment quant à la régularité du débit d'air dans les caissons, dont le maintien à un niveau approximativement constant nécessite de répartir sur toute la longueur de transfert plusieurs bouches d'arrivée d'air. De plus, ces dispositifs sont d'un coût de revient élevé, car réalisés à l'unité, sur mesure, en fonction des besoins de transfert.

Enfin ces dispositifs ne sont utilisables que dans un sens de déplacement du fait de leur conception, et lorsqu'il est nécessaire, comme c'est le cas, dans certaines fabrications, de pouvoir transférer des produits successivement dans deux directions opposées, il faut recourir à des dispositifs de transfert à bande porteuse, avec les inconvénients qui y sont inhérents, notamment au plan de la fiabilité et de l'entretien, le changement de sens de défilement n'étant en outre généralement obtenu qu'au moyen de réglages souvent longs et compliqués.

Ainsi, l'on connaît, tout particulièrement, au travers du document US-A-3.788.231, un dispositif de transfert sur flux d'air comportant une surface globalement plane surmontant un caisson à l'intérieur duquel est insufflé l'air sous pression. En fait, au niveau de cette surface plane sont réalisés des orifices, régulièrement répartis, et dans lesquels sont insérées des valves en forme de bouchons percés d'un orifice susceptible d'être obturé en cas de pression d'air à l'intérieur du caisson inférieur à une valeur seuil ou encore sous l'influence d'un circuit pneumatique de commande. Ainsi, lesdites valves communiquent, au niveau de leur partie inférieure insérée dans le caisson, avec un canal au travers duquel est acheminé le fluide de commande sous pression. Il convient, également, d'observer que dans le cadre de cette valve il est prévu des moyens qui permettent de commander son ouverture exclusivement lorsque l'objet et, dans ce cas, le chariot qu'il convient de transporter, se présente au-dessus de ladite valve. Plus précisément, cette dernière est encore percée d'un second canal qui a pour but de créer, sous ledit objet, une surpression d'où résulte la commande d'ouverture de la valve.

En outre, on connaît par le document AU-B-57377/86 un tel dispositif de convoyage sur flux d'air comportant une surface globalement plane perforée ou poreuse s'étendant au-dessus d'un caisson à l'intérieur duquel est insufflé l'air sous pression au moyen de ventilateurs ou analogues.

Quoi qu'il en soit, ces documents antérieurs n'apportent pas de solution aux problèmes visés plus haut.

La présente invention vise à remédier à ces divers inconvénients des dispositifs connus en proposant un dispositif de transfert à coussin d'air modulaire, d'une efficacité supérieure à celle des dispositifs existants et d'un coût de fabrication sensiblement inférieur, offrant une possibilité de changement de sens facile à réaliser, et des possibilités d'utilisation dans des lieux où les dispositifs à coussin d'air ne pouvaient jusqu'à présent être utilisés.

A cet effet, l'invention concerne un dispositif de transfert sur flux d'air d'objets comportant au moins une surface globalement plane surmontant un caisson et comportant des rebords longitudinaux ainsi que des orifices régulièrement répartis dans lesquels sont introduits des bouchons percés d'au moins un orifice, caractérisé par le fait qu'il est constitué d'un assemblage de plusieurs modules comprenant chacun un caisson fermé à chacune de ses extrémités et sur lequel est solidarisé un plateau définissant la surface globalement plane et comportant un fond, ainsi que des rebords longitudinaux réglables ou non en écartement, au moins un des bouchons étant percé d'un orifice d'axe non perpendiculaire au plan du fond du plateau, ledit caisson comportant, au moins, deux compartiments longitudinaux dans, l'un desquels, dénommé secondaire débouchent des orifices percés dans au moins l'un des rebords longitudinaux dudit plateau, tandis que dans l'autre compartiment défini principal débouchent les orifices percés dans le fond du plateau et recevant les bouchons percés d'au moins un orifice d'axe perpendiculaire ou non au plan du fond du plateau, dans le caisson étant logé un ventilateur comprenant une hélice disposée dans le compartiment principal en regard d'une ouverture aménagée dans la paroi séparant les deux compartiments.

Le plateau, qui est solidarisé au caisson par des moyens appropriés, comporte un fond et deux rebords longitudinaux, ou guides, dont l'espacement peut être variable selon les objets à transférer.

Conformément à l'invention, chaque caisson comporte une paroi interne séparant son volume intérieur en au moins deux compartiments, le principal et le secondaire. Le compartiment principal abrite l'hélice du ventilateur qui aspire l'air du compartiment secondaire en regard d'une ouverture ménagée dans la paroi interne. L'air est ainsi comprimé dans le compartiment principal et s'échappe par les orifices des bouchons, créant un flux d'air dirigé à la surface du fond du plateau.

En raison du faible diamètre des perçages des bouchons, et de l'espace délimité par le caisson, une surpression se crée dans ledit caisson, en sorte que la vitesse de sortie de l'air par lesdits perçages est bien upérieure à celle des dispositifs existants à ce jour, permettant de transporter des objets dont le rapport poids/surface portante est plus grand.

Optionnellement, il est possible d'adapter sur les rebords du plateau, extérieurement aux orifices qu'ils peuvent comporter, un couvercle, par exemple en matière plastique transparente, de façon que le flux d'air circule en circuit fermé, ce qui autorise l'utilisation du dispositif selon l'invention dans des lieux de fabrication dits en "salle blanche", où il ne doit pas y avoir de brassage de la poussière. Cette possibilité constitue un autre avantage appréciable du dispositif selon l'invention par rapport aux dispositifs existants, qui créent des mouvements d'air permanents.

Les caissons modulaires du dispositif selon l'invention peuvent être constitués de profilés en aluminium ou en matière plastique dure obtenus par extrusion et fermés à leurs deux extrémités.

La réalisation des caissons en aluminium par extrusion étant relativement coûteuse, car nécessitant entre autres,la mise en oeuvre d'une presse de forte puissance, les caissons modulaires du dispositif selon l'invention pourront avantageusement être réalisés par assemblage de planches d'aluminuim avec des profilés réalisés par extrusion.

Les profilés mis en oeuvre à cet effet peuvent présenter une forme globalemement parallélépipédique et comporter sur au moins deux de leurs faces, dans des plans différents, des rainures longitudinales dans lesquelles sont introduits les bords longitudinaux des planches.

Afin d'assurer une meilleure solidarisation des planches et des profilés, chacune des rainures longitudinales peut comporter sur l'une de ses parois latérales une série de stries longitudinales obliques dirigées vers le fond de ladite rainure.

Ce mode de réalisation des caissons du dispositif selon l'invention permet en outre d'adapter aisément la largeur et la hauteur d'un caisson, en modifiant la largeur des planches d'aluminium, les profilés restant les mêmes.

Outre les avantages déjà exposés, le dispositif selon l'invention présente cet avantage supplémentaire que sur toute la longueur du module la vitesse de sortie de l'air est constante pour un diamètre et une longueur donnés des orifices pratiqués dans les bouchons.

D'autre part, lédits bouchons étant amovibles, il est possible de modifier à volonté la vitesse de sortie de l'air en les remplaçant par d'autres bouchons présentant des orifices de diamètre plus ou moins grand et/ou d'obliquité différente et/ou de longueurs différentes.

Cette possibilité de remplacer aisément les bouchons rend d'autre part pratiquement inusable le dispositif selon l'invention, par remplacement des bouchons détériorés.

L'opération de remplacement des bouchons du dispositif selon l'invention peut s'effectuer avantageusement en les enfonçant pour les faire tomber dans le caisson, puis en faisant fonctionner la ventilation après avoir ouvert le caisson à l'une ou l'autre de ses extrémités, par laquelle ils sont évacués.

La modularité du dispositif selon l'invention permet d'utiliser chacun des modules individuellement, et d'autre part de modifier à volonté la configuration générale du chemin de transfert, en juxtaposant des modules courbes et des modules rectilignes.

Un autre avantage du dispositif selon l'invention réside en ce qu'il permet de réaliser deux sens opposés de déplacement, notamment en mettant en oeuvre des bouchons de conception particulière, comportant chacun, solidarisé à sa base, un anneau réalisé en un matériau magnétique, affleurant la paroi supérieure intérieure du caisson, contre laquelle peut se déplacer un clinquant métallique percé d'orifices de la dimension des bouchons susceptibles d'être amenés, sous l'effet d'une translation longitudinale le long de ladite paroi, alternativement en regard de bouchons comportant des orifices obliques dirigés dans des sens opposés, l'anneau en matériau magnétique permettant de plaquer ledit clinquant contre l'ouverture des bouchons non disposés en regard des orifices dudit clinquant.

Les avantages et les caractéristiques de la présente invention ressortiront plus clairement de la description qui suit et qui se rapporte au dessin annexé, lequel en représente divers modes de réalisation non limitatifs.

Dans le dessin annexé :
- la figure 1 représente une vue schématique en coupe transversale d'un premier mode de réalisation d'un module de transfert selon l'invention.
- la figure 2 représente une vue en coupe selon un plan vertical d'un bouchon.
- la figure 3 représente une vue en coupe transversale d'un second mode de réalisation d'un module de transfert selon l'invention.
- la figure 4 représente une vue en coupe longitudinale partielle d'un mode de réalisation du dispositif selon l'invention permettant des transferts dans deux sens opposés.
- la figure 5 représente une vue en coupe transversale d'un caisson selon l'invention, réalisé par assemblage de planches et de profilés.
- la figure 6 représente une vue à plus grande échelle, en coupe transversale, d'un des profilés de la figure 5.

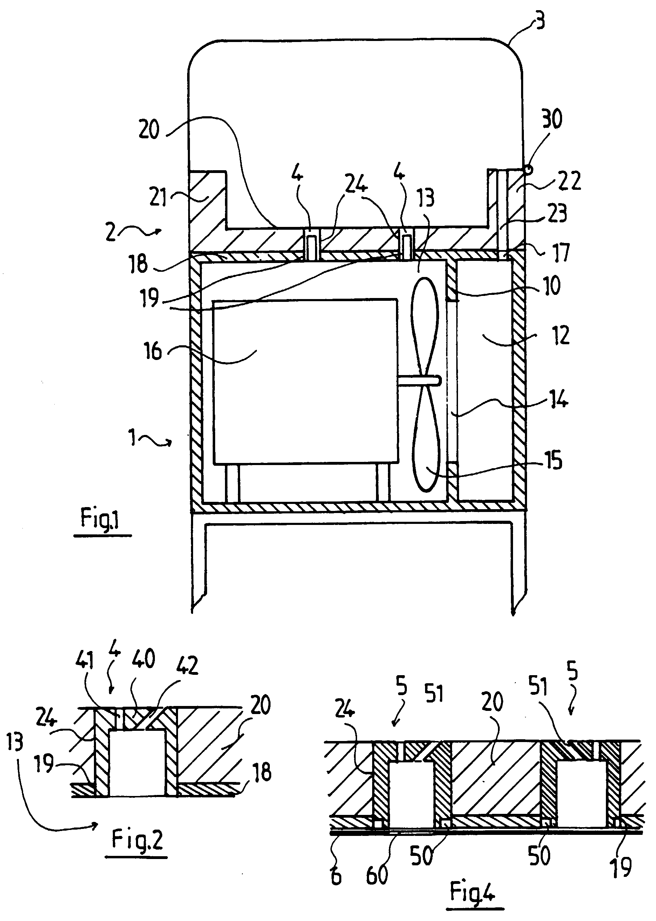

Si on se réfère à la figure 1 on peut voir le caisson 1 d'un module de transfert selon l'invention, dont le volume intérieur est séparé en deux compartiments 12 et 13 par une paroi verticale longitudinale 10.Cette paroi 10 comporte une ouverture ronde 14 en regard de laquelle est positionnée l'hélice 15 d'un ventilateur 16 placé dans le compartiment principal 13. Avantageusement le diamètre de l'ouverture 14 est inférieur à l'envergure de l'hélice 15, afin de provoquer, de façon connue en soi, un effet d'accélération du flux d'air aspiré par l'hélice 15 du compartiment secondaire 12 vers le compartiment principal 13.

Un plateau 2, solidarisé au caisson 1 à sa face supérieure, comporte un fond 20 et deux rebords longitudinaux 21 et 22. Sur le bord 22 s'articule autour d'un axe horizontal 30 un couvercle 3 couvrant complètement le plateau 2.

Le bord 22 du plateau 2 est percé d'orifices 23, régulièrement répartis, disposés en regard d'orifices 17 percés dans la paroi supérieure 18 du caisson 1 et débouchant dans le compartiment secondaire 12. De la même manière le fond 20 du plateau 2 est percé d'orifices 24 d'axes verticaux, régulièrement répartis, en regard d'orifices 19 percés dans la paroi 18 du caisson et débouchant dans le compartiment principal 13.

Si on se réfère également à la figure 2 on peut voir que dans les orifices en regard 24 et 19 sont introduits des bouchons 4 comportant, pratiqués dans leur face supérieure 40 et affleurant le plan supérieur du fond 20 du plateau 2, des orifices 41 d'axe vertical et 42 d'axe oblique.

Ainsi, sous l'action du ventilateur 16, il se crée un flux d'air provenant du compartiment secondaire 12 et remplissant le compartiment principal 13, flux d'air qui s'échappe par les orifices 41 et 42 des bouchons 4, le flux d'air provenant des orifices verticaux 41 permettant la sustentation des objets à transférer, et le flux d'air provenant des orifices obliques 42 permettant le déplacement de ces objets dans le sens donné par la direction du perçage de ces orifices 42.

Lorsque les transferts ont lieu en "salle blanche" le flux d'air circule en circuit fermé grâce au couvercle 3, l'air provenant des orifices 41 et 42 se répandant dans l'enceinte délimitée par le couvercle 3 et étant aspiré dans le compartiment secondaire 12 à travers les orifices 23 ménagés dans le rebord 21 du plateau 2.

Il est à noter que la forme et les dimensions du plateau 2 peuvent être variables selon l'utilisation que l'on en fait. Ainsi il peut être par exemple de plus grande largeur que le caisson 1, auquel cas les orifices 23 de retour d'air sont obliques ou coudés de façon à pouvoir communiquer avec les orifices 17 du caisson 1.

Il est à noter également qu'en faisant pivoter les bouchons 4 de manière que les orifices obliques 42 soient orientés non pas dans la direction du déplacement, mais obliquement vers le centre du caisson 1, on peut, en augmentant la vitesse de sortie de l'air c'est à dire en utilisant des bouchons comportant des orifices obliques 42 de diamètre réduit, déplacer des objets lourds sans avoir à augmenter le débit d'air.

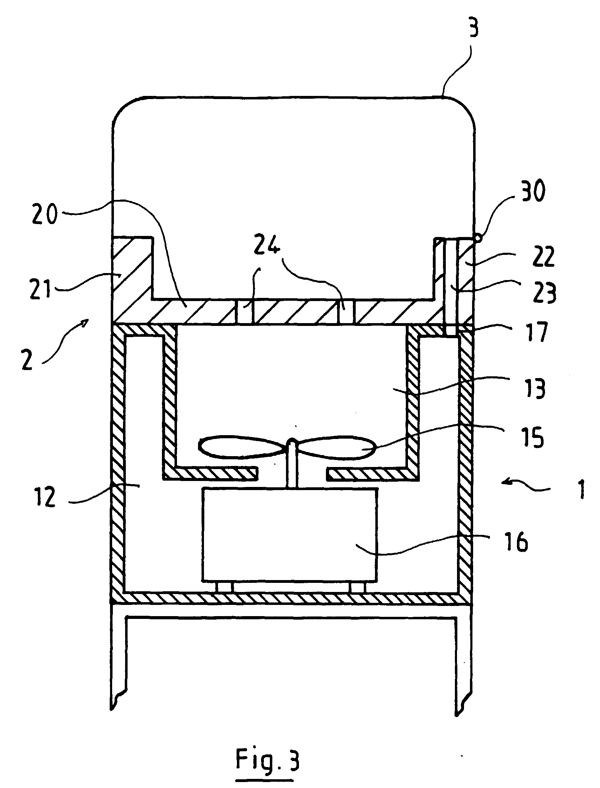

Si on se réfère maintenant à la figure 3 on peut voir que dans ce mode de réalisation le caisson 1 est formé d'un profilé à section en U, le compartiment principal 13 étant délimité par le profilé et le plateau 2, et le ventilateur 16 étant placé dans le compartiment secondaire 12, son hélice positionnée dans le compartiment principal 13.

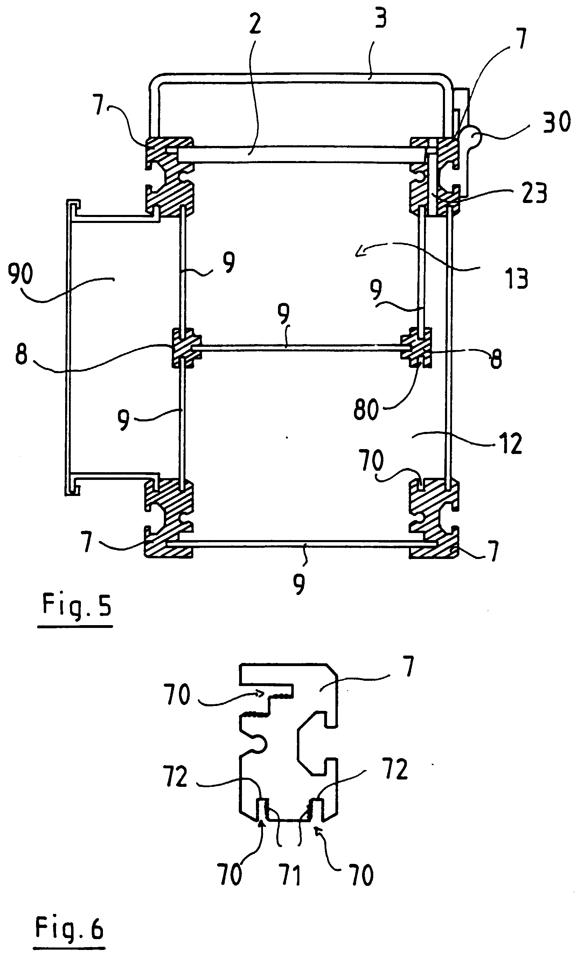

Si on se réfère maintenant à la figure 4, on peut voir un mode de réalisation du dispositif selon l'invention permettant de créer alternativement deux sens opposés de transfert.

Dans les orifices 24 et 19, respectivement du fond 20 du plateau 2 et de la paroi supérieure 18 du caisson 1, sont introduits alternativement, dans le sens de la longueur du caisson 1, des bouchons 5 comportant sur le pourtour de leur base un anneau 50 réalisé en un matériau magnétique, positionnés de manière que leur orifice 51 d'axe oblique soit alternativement, longitudinalement, dans deux sens opposés.

Contre la paroi 18 du profilé 1 peut coulisser un clinquant en fer 6 comportant des ouvertures 60 pouvant coïncider, au gré de son déplacement longitudinal assuré par exemple par un vérin placé en bout du module, avec soit les bouchons 5 dont les orifices 51 sont dirigés dans un sens , soit les bouchons 5 dont les orifices 51 sont dirigés dans l'autre sens, les anneaux 50 permettant de plaquer, par effet magnétique, le clinquant 6 contre les orifices 19 de la paroi 18 du caisson 1 qui ne sont pas en regard des orifices 60.

Ainsi, pour inverser le sens de déplacement, il suffit de stopper la ventilation, d'attendre que les objets soient stabilisés, puis de déplacer en translation le clinquant 6 et de remettre en marche la ventilation 16.

Ce mode de réalisation peut également être utilisé avec des bouchons 5 dont les orifices obliques 51 sont tous dirigés dans le même sens mais sont alternativement de diamètres différents, le déplacement du clinquant 6 ayant alors pour but de faire varier la puissance du flux d'air dirigé.

Il est d'autre part possible de réaliser un dispositif de transfert à sens variable au moyen de bouchons comportant chacun, outre un anneau en matière magnétique, une cloison interne verticale le séparant en deux compartiments, sa paroi supérieure étant percée d'orifices d'obliquités inverses selon qu'ils débouchent dans l'un ou l'autre compartiment. Le clinquant utilisé est alors percé alternativement d'orifices que l'on peut, au gré de son déplacement longitudinal, mettre en regard avec l'un ou l'autre des compartiments des bouchons.

Si on se réfère maintenant à la figure 5 on peut voir que le caisson 1 peut être réalisé, non pas d'un bloc par extrusion, mais par assemblage en force de profilés 7 et 8 avec des planches 9 et le plateau 2, de façon à créer les compartiments 12 et 13.

Les profilés 7, représentés à la figure 6, et les profilés 8, tous réalisés par extrusion, comportent des rainures longitudinales 70, 80, disposées dans des plans différents et dont une paroi latérale comporte des stries longitudinales 71 obliques dirigées vers le fond 72 de la rainure.

Ce procédé de réalisation permet de réaliser facilement, au moyen des mêmes profilés 7 et 8, en fonction du choix des planches 9, des caissons de formes et de dimensions différentes, permettant en outre de réaliser un compartiment supplémentaire 90 servant au passage des câbles électriques.

Il va de soi que la présente invention ne saurait être limitée à la description qui précède de certains de ses mode de réalisation, susceptibles de subir des modifications sans pour autant sortir du cadre de l'invention.

## Revendications

1. Dispositif de transfert sur flux d'air d'objets comportant au moins une surface globalement plane surmontant un caisson et comportant des rebords longitudinaux (21, 22) ainsi que des orifices régulièrement répartis dans lesquels sont introduits des bouchons (4) percés d'au moins un orifice, caractérisé par le fait qu'il est constitué d'un assemblage de plusieurs modules comprenant chacun un caisson 1 fermé à chacune de ses extrémités et sur lequel est solidarisé un plateau (2) définissant la surface globalement plane et comportant un fond (20) ainsi que les rebords longitudinaux (21, 22) réglables ou non en écartement, ledit caisson (1) comportant, au moins, deux compartiments longitudinaux (12, 13), dans l'un (12) desquels dénommé secondaire débouchent des orifices (23) percés dans au moins l'un des rebords longitudinaux (21, 22) dudit plateau (2), tandis que dans l'autre compartiment (13), défini principal débouchent les orifices percés dans le fond (20) du plateau (2) et recevant les bouchons (4) percés d'au moins un orifice d'axe perpendiculaire ou non au plan du fond (20) du plateau (2), au moins un des bouchons (4) étant percé d'un orifice d'axe non perpendiculaire au plan du fond (20) du plateau (2), dans le caisson (1) étant logé un ventilateur (16) comprenant une hélice (15) disposée dans le compartiment principal (13) en regard d'une ouverture (14) aménagée dans la paroi (10) séparant les deux compartiments (12, 13).

2. Dispositif de transfert selon la revendication 1, caractérisé en ce que le ventilateur (16) et son hélice (15) sont tous deux logés dans le compartiment principal (13).

3. Dispositif de transfert selon la revendication 1, caractérisé en ce que le ventilateur (16) est logé dans le compartiment secondaire (12) et son hélice (15) dans le compartiment principal (13).

4. Dispositif de transfert selon la revendication 1, caractérisé en ce que le plateau (2) est surmonté d'un couvercle (3) s'articulant sur un de ses rebords, extérieurement, aux orifices qu'il comporte, permettant à l'air de circuler en circuit fermé.

5. Dispositif de transfert selon la revendication 1, caractérisé en ce que les bouchons (4) comportent à leur base et sur leur pourtour un anneau (50) en matériau magnétique affleurant la paroi supérieure intérieure du caisson (1), contre laquelle peut coulisser longitudinalement un clinquant métallique (6) comportant des orifices (60) ouvrant alternativement, en fonction du déplacement longitudinal dudit clinquant (6), sur les bouchons (4) dont les orifices obliques sont de directions différentes.

6. Dispositif de transfert selon l'une quelconque des revendications précédentes, caractérisé en ce que chaque caisson (1) est réalisé par l'assemblage, avec des planches (9), de profilés (7, 8) obtenus par extrusion et comportant des rainures longitudinales (70, 80) positionnées dans des plans différents, ledit assemblage permettant de créer les deux compartiments (12, 13).

7. Dispositif de transfert selon la revendication 6, caractérisé en ce qu'une paroi latérale des rainures (70, 80) comporte des stries longitudinales (71) obliques orientées vers le fond (72) de la rainure, en vue d'assurer une meilleure solidarisation des planches (9) aux profilés (7, 8).

## Patentansprüche

1. Vorrichtung zum Fördern von Gegenständen auf einem Luftfilm, die wenigstens eine insgesamt flache Oberfläche umfaßt, mit der ein Kasten gekront ist und die hochstehende Längsränder (21, 22) sowie regelmäßig verteilte Löcher umfaßt, in denen mit wenigstens einem Loch versehene Stöpsel (4) eingesetzt sind, dadurch gekennzeichnet, daß sie aus einer Zusammenfügung von mehreren Baukästen besteht, die jeweils einen an jedem seiner Enden geschlossenen Kasten (1) umfassen, mit dem eine die insgesamt flache Oberfläche definierende Platte (2) fest verbunden ist , die einen Boden (20) sowie die Längsränder (21, 22), die abstandsmäßig justierbar sind oder nicht, umfaßt, wobei der genannte Kasten (1) wenigstens zwei Längsfächer (12, 13) umfaßt, in eines (12) wovon, das Sekundärfach genannt wird, in wenigstens einem Längsrand (21, 22) der genannten Platte (2) gebohrte Löcher (23) enden, während in das andere Fach (13), das als Hauptfach definiert wird, die im Boden (20) der Platte (2) gebohrten Löcher enden, die die Stöpsel (4) aufnehmen, die mit wenigstens einem Loch mit senkrecht oder nicht zur Ebene des Bodens (20) der Platte (2) verlaufender Achse versehen sind, wobei wenigstens ein Stöpsel (4) mit einem Loch mit nichtsenkrecht zur Ebene des Bodens (20) der Platte (2) verlaufender Achse versehen ist, und im Kasten (1) ein Ventilator (16) untergebracht ist, der eine im Hauptfach (13) gegenüber einer in der die beiden Fächer (17, 13) trennenden Wand (10) vorgesehenen Öffnung (14) angeordnete Luftschraube (15) umfaßt.

2. Fördervorrichtung nach Anspruch 1, dadurch gekennzeichnet, daß der Ventilator (16) und dessen Luftschraube (15) beide im Hauptfach (13) untergebracht sind.

3. Fördervorrichtung nach Anspruch 1, dadurch gekennzeichnet, daß der Ventilator (16) im Sekundärfach (12) und dessen Luftschraube (15) im Hauptfach (13) untergebracht ist.

4. Fördervorrichtung nach Anspruch 1, dadurch gekennzeichnet, daß die Platte (2) mit einem Deckel gekront (3) ist, der sich außerhalb der Löcher, die er umfaßt, gelenkig um einen hochstehenden Rand bewegt, was es der Luft erlaubt, in geschlossenem Kreis zu fließen.

5. Fördervorrichtung nach Anspruch 1, dadurch gekennzeichnet, daß die Stöpsel (4) an ihrer Base und an ihrem Umkreis einen Ring (50) aus einem magnetischen Material umfassen, der auf gleicher Höhe als die obere Innenwand des Kastens (1) liegt, an der eine Metallfolie (6) in Längsrichtung gleiten kann, die Löcher (60) umfaßt, die je nach der Längsbewegung der genannten Metallfolie (6) abwechselnd auf die Stöpsel (4) öffnet, deren schräge Löcher unterschiedliche Richtungen haben.

6. Fördervorrichtung nach irgendeinem der vorgehenden Ansprüche, dadurch gekennzeichnet, daß jeder Kasten (1) aus einer Zusammenfügung mit Brettern (9) von Profileisen (7, 8) besteht, die durch Extrusion erhalten werden und auf unterschiedlichen Ebenen angeordnete Längsnuten (70, 80) umfassen, wobei die genannte Zusammenfügung es erlaubt, die beiden Fächer (12, 13) zustandezubringen.

7. Fördervorrichtung nach Anspruch 6, dadurch gekennzeichnet, daß eine Seitenwand der Nuten (70, 80) schräge, dem Boden (72) der Nute zugewandte Längsrippen (71) umfaßt, um eine bessere, feste Verbindung der Bretter (9) mit den Profileisen (7, 8) zu gewährleisten.

## Claims

1. Device for transferring objects by means of an air flow, having at least one globally flat surface topping a box and including longitudinal rims (21, 22) as well as regularly distributed holes into which are engaged plugs (4) provided with at least one hole, characterized in that it is formed by an assembly of several modules having each a box (1) closed at each of its ends and with which is made integral a tray (2) defining the globally flat surface and having a bottom (20) as well as the longitudinal rims (21, 22) the distance between which is adjustable or not, said box (1) including at least two longitudinal compartments (12, 13) into one (12) of which, called secondary compartment, end holes (23) drilled in at least one longitudinal rim (21, 22) of said tray (2), whereas into the other compartment (13), defined as main compartment, end the holes drilled in the bottom (20) of the tray (2) and receiving the plugs (4) provided with at least one hole with its axis perpendicular or not to the plane of the bottom (20) of the tray (2), at least one plug (4) being provided with a hole with its axis not perpendicular to the plane of the bottom (20) of the tray (2), inside the box (1) being accomodated a fan (16) including a propeller (15) arranged inside the main compartment (13) in front of an opening (14) provided for in the wall (10) separating both compartments (17, 13).

2. Transfer device according to claim 1, characterized in that the fan (16) and its propeller (15) are both accomodated inside the main compartment (13).

3. Transfer device according to claim 1, characterized in that the fan (16) is accomodated inside the secondary compartment (12) and its propeller (15) in the main compartment (13).

4. Transfer device according to claim 1, characterized in that the tray (2) is topped with a cover (3) hinging about its one rim, externally to the holes it includes, allowing the air to circulate in a closed circuit.

5. Transfer device according to claim 1, characterized in that the plugs (4) include at their base and at their periphery a ring (50) made of a magnetic material flush with the inner upper wall of the box (1) against which can longitudinally slide a metal foil (6) including holes (60) alternately opening, according to the longitudinal movement of said foil (6), onto the plugs (4) the oblique holes of which have different directions.

6. Transfer device according to anyone of the preceding claims, characterized in that each box (1) is formed by assembling with boards (9) profiles (7, 8) obtained through extrusion and including longitudinal grooves (70, 80) positioned in different planes, said assembling allowing to form both compartments (12, 13).

7. Transfer device according to claim 6, characterized in that a side wall of the grooves (70, 80) includes oblique longitudinal ribs (71) oriented towards the bottom (72) of the groove, in order to ensure a better integral connection between the boards (9) and the profiles (7, 8).
